# EUROPEAN PATENT APPLICATION

(11) **EP 1 493 715 A1**
(43) Date of publication of application: **05.01.2005**
(21) Application number: 03701729.0
(22) Date of filing: 15.01.2003
(51) Int. Cl.: C01G 45/02

(54) **MANGANESE OXIDE PRODUCING METHOD**

(30) Priority: 08.04.2002 JP 2002105438
(71) Applicant: Nikko Materials Co., Ltd., Tokyo 105-8407 (JP)
(72) Inventor: KAJIYA, Yoshio, c/o Petoca Materials Ltd., Kashima-gun, Ibaraki 314-0198 (JP); TASAKI, Hiroshi, c/o Petoca Materials Ltd., Kashima-gun, Ibaraki 314-0198 (JP)
(74) Representative: Goddar, Heinz J., Dr.
(86) International application number: PCT/JP2003/000248
(87) International publication number: WO 2003/084874

(57) **Abstract**

The invention is intended to establish means for stably producing manganese oxide high in tap density, suitable for use as a raw material for producing a positive plate material of a lithium secondary cell at high production yield and with high work efficiency. The means comprise the steps of employing a rotary kiln as a roasting furnace when producing manganese oxide by roasting of manganese carbonate, starting the roasting by supplying the manganese carbonate through a material charging port of the rotary kiln while filling up the roasting furnace with a low oxidizing atmosphere, (for example, in the atmosphere with oxygen concentration not more than 15%) and continuing the roasting of material for roasting while blowing an oxygen-containing gas (for example, a gas with oxygen concentration not less than 15%) onto the material for roasting, placed at a position inside the roasting furnace, away at a distance from the material charging port. Atmospheric temperature inside the roasting furnace is preferably kept in a range of 400 to 600°C.

## Description

### TECHNICAL FIELD

The present invention relates to a method of producing manganese oxide suitable for use as a raw material for producing lithium-manganese complex oxide (LiMnO₂, LiMn₂O₄) for use as a positive plate material of a lithium secondary cell.

### BACKGROUND TECHNOLOGY

There has recently been seen a mounting tendency to substitute lithium-manganese complex oxide (LiMnO₂, LiMn₂O₄) for LICoO₂, LiNiO₂, and so forth, used in the past as a positive plate active material of a lithium secondary cell.

The lithium-manganese complex oxide is generally produced by causing manganese oxide to react with a lithium salt (lithium carbonate, and so on), and for the manganese oxide serving as a raw material for the lithium-manganese complex oxide, use is made of various types of manganese dioxide (MnO₂) such as electrolytic manganese dioxide, chemically processed manganese dioxide, and so on, developed as material for use in a manganese dry cell, or dimanganese trioxide (Mn₂O₃) obtained by applying a heat treatment to these manganese dioxides.

However, since these manganese dioxides are relatively large in grain size (max. grain size: 100 µm or larger, average grain size: 25 µm or larger), the lithium-manganese complex oxides that are produced from the same as well become large in grain size. Accordingly, there has been pointed out a problem that an electrode of the lithium secondary cell, obtained by applying the lithium-manganese complex oxide thereto, has difficulty with having a smooth surface.

Attempts are being made to improve the characteristics of the lithium secondary cell by pulverizing those manganese dioxides to thereby reduce the grain size thereof, however, raw material for the secondary cell is porous in structure in the first place, so that if the raw material is pulverized and is reduced in gain size, the tap density thereof becomes considerably small (by far less than 1.5 g / cm³), having resulted in deterioration not only in applicability thereof to the electrode but also in energy density thereof, per unit volume.

For this reason, there has been proposed "a method of producing manganese oxide (Mn₂O₃) by two-stage roasting whereby manganese carbonate is roasted in an atmosphere low in oxygen content (with a low oxidizing atmosphere), followed by roasting in an atmosphere high in oxygen content" as disclosed in JP-A 2000-281349, and JP-A 2000-281351, respectively, as means for producing "high-density manganese oxide composed of fine particles" suitable for use in production of lithium-manganese complex oxide, small in grain size and having a high tap density, that are fully satisfactory as a positive plate material of a lithium secondary cell.

The method of producing manganese oxide (Mn₂O₃) by the two-stage roasting of manganese carbonate has made it possible to obtain a high-density manganese oxide composed of spherical fine particles, not more than 10 µm in median diameter and having tap density not less than 1.8 g / cm³, and a lithium-manganese complex oxide produced from the high-density manganese oxide as a raw material has been found fine in gain size, and has indicated a high tap density, thereby greatly contributing to enhancement in the performance of the lithium secondary cell.

However, in view of the recent circumstances where demands for labor-saving, energy saving, and lower cost are increasingly severe in various sectors of the industry, "the method of producing manganese oxide by the two-stage roasting of manganese carbonate" has since been reviewed. As a result, it has been concluded that the method still has "room for further improvement in respect of production yield and work efficiency".

That is, with "the method of producing manganese oxide by the two-stage roasting of manganese carbonate", "high-density manganese oxide composed of fine particles" can certainly be obtained, however, production efficiency in not necessarily excellent, and if an attempt is made to obtain manganese oxide having tap density not less than 2.0 g / cm³, production yield has often stayed around 50%. On the other hand, if an attempt is made to enhance the production yield, production on a small-lot basis has been unavoidable, inevitably rendering operation disadvantageous in respect of work efficiency.

### DISCLOSURE OF THE INVENTION

It is therefore an object of the invention to establish means for stably producing manganese oxide high in tap density, and fully satisfactory as a raw material for lithium-manganese complex oxide for use as a positive plate material of a lithium secondary cell at high production yield and with high work efficiency.

Tb attain the object described, the inventor et al. have continued intense studies, and have obtained knowledge itemized as follows:
a) With "the method of producing manganese oxide by the two-stage roasting of manganese carbonate" as disclosed in JP-A 2000-281349, or JP-A 2000-281351, there is adopted "stationary roasting whereby manganese carbonate powders are charged into a stationary reactor to be thereby roasted" that is commonly adopted in roasting this type of material. With the stationary roasting, however, there occurs a difference in properties (tap density, specific surface area) between "manganese oxides as obtained" in the upper and lower parts of the stationary reactor, respectively, resulting in deterioration in production yield of a product (manganese oxide) as an object. Further, if an amount of material charged into the stationary reactor is reduced, the inconvenience as described can be alleviated, but, in that case, there is no denying that extreme deterioration in work efficiency will occur.
b) ) In contrast, if a rotary kiln is employed as a roasting furnace for roasting of manganese carbonate, the manganese carbonate charged into the rotary kiln is roasted while filling up the roasting furnace with a low oxidizing atmosphere; and at the same time, the roasting is continued while blowing an oxygen-containing gas, such as air and so forth, onto material for roasting, placed at a predetermined position inside the rotary kiln, continuous charging of the manganese carbonate into the rotary kiln can be executed. Furthermore, with a rotary kiln process, there occurs no difference in roasting condition, due to a difference in the position of the material for roasting, such as the upper part or the lower part of the stationary reactor as in the case of the stationary roasting, so that manganese oxide having homogeneous properties can be obtained, thereby enabling manganese oxide of intended properties to be produced at a considerably high production yield and with high work efficiency. Furthermore, since the manganese carbonate as continuously charged is first roasted with a low oxidizing atmosphere, and subsequently, is further roasted in the vicinity of a position where the oxygen-containing gas is blown in under an atmospheric condition with high oxygen concentration, there can be created the same roasting condition as that for the case of "the method of producing manganese oxide by the two-stage roasting of manganese carbonate" as preciously disclosed in JP-A 2000-281349, or JP-A 2000-281351, so that it becomes possible to produce manganese oxide small in median diameter (for example, not more than 10 µm), and high in tap density (not less than 1.2 g / cm³, preferably not less than 1.8 g / cm³) with high efficiency.
c) In addition, by regulating atmospheric temperature inside the rotary kiln, it is also possible to adjust the tap density and specific surface area of manganese oxide as obtained.

The invention has been successfully developed based on the knowledge itemized as above, and provides a method of producing a high-density manganese oxide composed of fine particles, as shown below:
(1) A method of producing a high-density manganese oxide composed of fine particles, comprising the steps of:
   employing a rotary kiln as a roasting furnace when producing manganese oxide by roasting of manganese carbonate;
   starting the roasting by supplying the manganese carbonate through a material charging port of the rotary kiln while filling up the roasting furnace with a low oxidizing atmosphere; and
   continuing the roasting of material for roasting while blowing an oxygen-containing gas onto the material for roasting, placed at a position inside the roasting furnace, away at a distance from the material charging port.
(2) The method according to Item (1), wherein an atmosphere inside the roasting furnace at least up to the position where the oxygen-containing gas is blown into the roasting furnace may be an atmosphere with oxygen concentration less than 15%.
(3) The method according to Item (1) or (2), wherein for the oxygen-containing gas blown onto the material for roasting, use is preferably made of a gas with oxygen concentration not less than 15%.
(4) The method according to any of Items (1) to (3), wherein atmospheric temperature inside the roasting furnace is preferably kept in a range of 400 to 600°C.

### BRIEF DESCRIPTION OF THE DRAWINGS

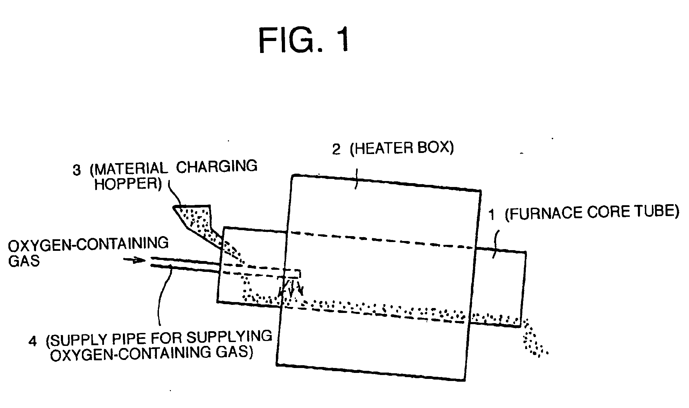

Fig. 1 is a schematic representation showing an example of a rotary kiln for use in carrying out the invention.

### BEST FORM FOR CARRYING OUT THE INVENTION

A preferred embodiment of a method of producing manganese oxide according to the invention together with operation thereof are described in detail hereinafter.

To start with, while there is no particular limitation to manganese carbonate as raw material for use in carrying out the invention, manganese carbonate composed of spherical fine particles, such as one (median diameter: not more than 10 µm, tap density: not less than 1.2 g / cm³) disclosed in JP-A 2000-281349 is preferably used.

Further, the manganese carbonate disclosed in JP-A 2000-281349 is obtained by a treatment whereby manganese metal is dissolved in a solution containing ammonium ions, and CO₂ gas is blown into regions of the solution, having pH not less than 8.5.

Now, with the present embodiment, the manganese carbonate as material for producing manganese oxide is subjected to a roasting treatment applied in a rotary kiln.

Fig. 1 is a schematic representation showing an example of a rotary kiln for use in carrying out the invention. The rotary kiln is a type of furnace wherein a rotating furnace core tube 1 is heated in a heater box 2, and manganese carbonate is supplied into the furnace from a material charging hopper 3 through a material charging port of the rotary kiln (raw material charging port of the furnace core tube 1). Reference numeral 4 denotes a supply pipe for supplying an oxygen-containing gas, and the tip thereof is provided with "nozzle holes each having an opening facing the inner wall of the furnace core tube 1, on the bottom side thereof" in order to blow the oxygen-containing gas onto material for roasting, placed "at predetermined position inside the furnace, away at a distance from the material-charging port" as described later.

Control of oxygen concentration in atmosphere will suffice for filling up the rotary kiln with a low oxidizing atmosphere. For example, the technique of causing a nitrogen gas with an air mixing ratio thereof after adjusted to flow inside the furnace can be adopted.

The manganese carbonate continuously supplied through the raw material charging port of the rotary kiln is first heated with the low oxidizing atmosphere inside the furnace, thereby undergoing reaction as expressed by the following chemical formula:

MnCO₃ + xO₂ = (Mn₃O₄, or a mixture of Mn₃O₄ + Mn₂O₃)

As a result, manganese oxide in a low oxidized state is produced without generating porous MnO₂.

The manganese oxide in the low oxidized state is a mixture of Mn₂O₃ + Mn₃O₄ (mainly Mn₃O₄ when heating temperature, that is, atmospheric temperature is low or at the outset of heat treatment) having color tone in reddish purple. As the mixture travels forward and roasting proceeds, so Mn₃O₄ undergoes transformation to Mn₂O₃, thereby increasing its tap density

In order to generate manganese oxide with a high tap density, it is desirable that an atmosphere inside the furnace (particularly, the atmosphere inside the furnace, in the vicinity of the material charging port) has oxygen concentration less than 15% (preferably, no more than 10%, and more preferably, no more than 5%). This is because if oxygen concentration is 15% or higher, porous MnO₂ is generated, so that the tap density thereof tends to decrease.

With the method according to the invention, upon arrival of the material for roasting (manganese oxide which is the mixture of Mn₂O₃ and Mn₃O₄) that travels forward inside the rotary kiln while being roasted with the low oxidizing atmosphere at a predetermined position {a position at which an increase in tap density of the material for roasting (manganese oxide) starts showing a tendency toward saturation, and which may be decided upon on the basis of the results of prior studies} away at a distance from the material charging port, the oxygen-containing gas is blown onto the material for roasting, placed at the predetermined position.

Thus, by continuing roasting while blowing the oxygen-containing gas, time required for transforming the material for roasting, still in Mn₃O₄ form, into Mn₂O₃ can be shortened, so that manganese oxide in single phase of Mn₃O₄ can be obtained in a relatively short time.

For the oxygen-containing gas to be blown onto the material for roasting (manganese oxide), a gas (for example, air or a nitrogen gas with air mixed therein) with oxygen concentration adjusted to not less than 15% (preferably, not less than 20%) is preferably used. If the oxygen-containing gas has oxygen concentration less than 15%, speedy transformation of Mn₃O₄ as contained into Mn₂O₃ does not occur, thereby posing the risk of longer time required for treatment or resultant deterioration in product performance.

Atmospheric temperature inside the rotary kiln is preferably in a range of 400 to 600°C. If the atmospheric temperature inside the furnace is below 400°C, not only manganese carbonate does not effectively undergo transformation into the manganese oxide in the low oxidized state, but also speedy transformation of generated Mn₃O₄ into Mn₂O₃ does not occur, thereby posing the risk of longer time required for treatment or resultant deterioration in product performance. On the other hand, if the atmospheric temperature inside the furnace exceeds 600°C, the particles of the manganese oxide undergo cohesion / sintering with each other, thereby raising a risk that product manganese oxide, fine in grain size and high in tap density, cannot be obtained.

In addition, by regulating the atmospheric temperature within the range of 400 to 600°C, tap density and specific surface area of manganese oxide (Mn₂O₃) as obtained can be adjusted.

For example, by keeping the atmospheric temperature in a range of 450 to 500°C, it becomes easier to obtain manganese oxide having the tap density on the order of 1.9 g / cm³, and the specific surface area on the order of 2.5 m² / g, and by keeping the atmospheric temperature in a range of 500 to 550°C, it becomes easier to obtain manganese oxide having the tap density on the order of 2.2 g / cm³, and the specific surface area on the order of 2.2 m² / g.

With the above-described method according to the invention, manganese oxide small in medial diameter and high in tap density can be produced with high efficiency at production yield in a range of 80 to 90%.

Further, rpm of the rotary kiln, and residence time of the material for roasting, in the rotary kiln, may be adjusted depending on a volume of the manganese carbonate to be treated, homogeneity of manganese oxide as obtained, size of the rotary kiln, the atmospheric temperature, oxygen concentration in the atmosphere, and so forth.

Now, when the high-density manganese oxide composed of fine particles, not more than 10 µm in median diameter and not less than 1.8 g / cm³ in tap density, having a large specific surface area, is used as material for production of, for example, lithium manganate (LiMnO₂, LiMn₂O₄) for use in a lithium secondary cell, pronounced enhancement in cell characteristics (current load characteristic, cycle characteristic, etc.) is brought about. Further, the more spherical the shape of manganese oxide particles, the more advantageous it becomes to obtain these characteristics, however, in order to render the manganese oxide particles spherical in shape, it is necessary to select manganese carbonate, as raw material thereof, as much uniform in spherical shape as possible, and to take precautions so as not to allow the atmospheric temperature at the time of roasting the manganese carbonate for obtaining manganese oxide to become excessively high.

Next, the invention is more specifically described with reference to a working example described as follows.

### Working Example

First, manganese carbonate 10 µm in median diameter, and 1.2 g / cm³ in tap density was prepared by use of the method (the treatment whereby manganese metal is dissolved in a solution containing ammonium ions while CO₂ gas is blown into the regions of the solution, having pH not less than 8.5) as previously disclosed in JP-A 2000-281349.

Subsequently, with the use of a rotary kiln (the inside diameter of a furnace core tube: 200 mm, the length thereof: 3000 mm) of the type shown Fig. 1, a roasting treatment was applied to the manganese carbonate by continuously charging the manganese carbonate into the rotary kiln at a charging rate of 0.06 kg / min.

During the roasting treatment, "a mixed gas composed of air and nitrogen with oxygen concentration adjusted to 5%" was fed into the rotary kiln at a flow rate of 10 liter / min while rotational speed of the furnace core tube was adjusted to 3 rpm, and traveling speed of charged material was adjusted to 200 mm / min. Further, "a mixed gas composed of air and nitrogen with oxygen concentration adjusted to 20%" was continuously blown onto material for roasting, placed at a position inside the furnace, 1200 mm away from a material charging port and on the inner wall of the furnace, on the bottom side thereof, at a flow rate of 45 liter / min through a supply pipe for supplying an oxygen-containing gas.

The roasting treatment was applied under five different conditions in that atmospheric temperature was 450°C, 500°C, 550°C, 600°C, and 600°C, respectively.

Manganese oxide (Mn₂O₃) obtained by application of the roasting treatment was studied as to properties thereof, and the results of studies are summed up and are shown in Table 1 below.

As is evident from the results shown in Table 1, with the method according to the invention, the high-density manganese oxide composed of fine particles, having tap density not less than 1.8 g / cm³, can be produced at high yield with excellent workability.

The high-density manganese oxide having such a high tap density as described, if used, for example, as raw material for lithium manganate for use in a lithium secondary cell, is expected to greatly contribute to enhancement in the performance of the lithium secondary cell as a product.

However, it can be seen from the results shown that if atmospheric temperature is as high as at 650°C, sintering of particles further proceeds to thereby cause the shape of the particles to be distorted, resulting in deterioration in specific surface area.

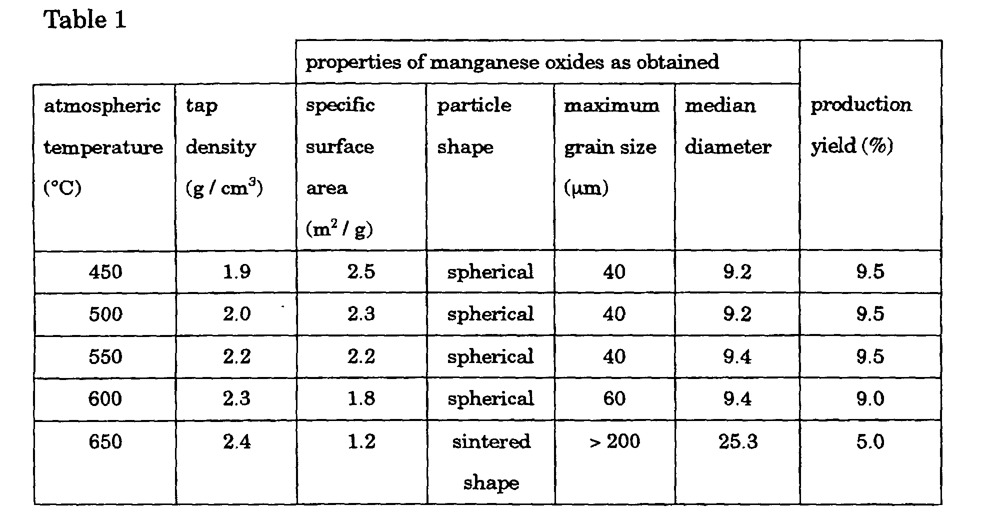

### INDUSTRIAL UTILIZATION

With the present invention, high-density manganese oxide composed of fine particles, high in tap density, can be stably produced at high yield and with high efficiency, so that very useful industrial effects, such as low cost production of, for example, lithium manganate for use in a lithium secondary cell having sufficiently satisfactory cell characteristics, are brought about by using the high-density manganese oxide as raw material for production of the lithium manganate.

## Claims

1. A method of producing a high-density manganese oxide composed of fine particles, comprising the steps of:
employing a rotary kiln as a roasting furnace when producing manganese oxide by roasting of manganese carbonate;
starting the roasting by supplying the manganese carbonate through a material charging port of the rotary kiln while filling up the roasting furnace with a low oxidizing atmosphere; and
continuing the roasting of material for roasting while blowing an oxygen-containing gas onto the material for roasting, placed at a position inside the roasting furnace, away at a distance from the material charging port.

2. A method of producing a high-density manganese oxide composed of fine particles, according to claim 1, wherein an atmosphere inside the roasting furnace at least up to the position where the oxygen-containing gas is blown into the roasting furnace is an atmosphere with oxygen concentration less than 15%.

3. A method of producing a high-density manganese oxide composed of fine particles, according to claims 1 or 2, wherein for the oxygen-containing gas blown onto the material for roasting, use is made of a gas with oxygen concentration not less than 15%.

4. A method of producing a high-density manganese oxide composed of fine particles, according to any of claims 1 to 3, wherein atmospheric temperature inside the roasting furnace is kept in a range of 400 to 600°C.
